# EUROPEAN PATENT APPLICATION

(11) **EP 4 224 383 A1**
(43) Date of publication of application: **09.08.2023**
(21) Application number: 22202222.0
(22) Date of filing: 18.10.2022
(51) Int. Cl.: G06Q 10/00, G06Q 10/08, G06Q 10/087, G06Q 50/10

(54) **MANAGEMENT DEVICE, MANAGEMENT METHOD, AND MANAGEMENT PROGRAM**

(30) Priority: 07.02.2022 JP 2022017451
(71) Applicant: FUJITSU LIMITED, Kawasaki-shi, Kanagawa 211-8588 (JP)
(72) Inventor: NISHIMAKI, Satoru, Kawasaki-shi 211-8588 (JP)
(74) Representative: Haseltine Lake Kempner LLP

(57) **Abstract**

A management device includes a processor configured to: when a coupling relationship between an own node and another node in which a channel capable of off-chain transaction is formed among a plurality of nodes capable of communicating with each other is registered, transmit first route information that represents the coupling relationship to a node in a first group that includes an own node and the another node among the plurality of nodes; and when second route information that represents a coupling relationship between a first node in the first group and a node in the first group is received from the first node that has received the first route information, update route table information used for a route search from an own node to a node serving as a payment destination in the first group based on the received second route information.

## Description

### FIELD

The embodiment discussed herein is related to a management device, a management method, and a computer-readable recording medium storing a management program.

### BACKGROUND

In recent years, research and development have been conducted on a framework that promotes an environmentally-friendly action change by visualizing the environmental contribution in a supply chain and returning a consideration for the environmental contribution. A variety of stakeholders are included in a supply chain, and utilization of a blockchain is attracting attention in order to securely pay a consideration. There is a case in which an off-chain transaction is performed in making a payment in virtual currency.

As related art, for example, there is a technique in which, in a case where a use right satisfying registered restriction information is exercised, use right exercise information is updated, and an update instruction for updating account information of a financial institution of a primary payer and account information of a financial institution of a provider is issued in response to the exercise of the use right. There is a technique for limiting a remittance destination of virtual currency managed by a blockchain. There is a system for calculating the validity of a blockchain that controls access to encrypted data. There is a system including an off-chain settlement hub.

Japanese Laid-open Patent Publication No. 2021-033420, Japanese Laid-open Patent Publication No. 2020-126497, U.S. Patent No. 11080412, and U.S. Patent Application Publication No. 2019/0139037 are disclosed as related art.

However, in the related art, there is a problem in which a load applied to a route search for performing an off-chain transaction increases as the number of nodes in a network increases.

In one aspect, an object of the present disclosure is to reduce a load applied to a route search.

According to one aspect of the present disclosure, such an effect is obtained that it is possible to reduce a load applied to a route search.

### SUMMARY

According to an aspect of the embodiments, a management device includes a processor configured to: when a coupling relationship between an own node and another node in which a channel capable of off-chain transaction is formed among a plurality of nodes capable of communicating with each other is registered, transmit first route information that represents the coupling relationship to a node in a first group that includes an own node and the another node among the plurality of nodes; and when second route information that represents a coupling relationship between a first node in the first group and a node in the first group is received from the first node that has received the first route information, update route table information used for a route search from an own node to a node serving as a payment destination in the first group based on the received second route information.

### BRIEF DESCRIPTION OF DRAWINGS

FIG. 1 is an explanatory diagram illustrating an exemplary embodiment of a management method according to an embodiment;
FIG. 2 is an explanatory diagram illustrating an example of a system configuration of an information processing system;
FIG. 3 is a block diagram illustrating an example of a hardware configuration of a node;
FIG. 4 is an explanatory diagram illustrating an example of the storage contents of a supply chain information store;
FIG. 5 is an explanatory diagram illustrating an example of the data structure of a route table;
FIG. 6 is a block diagram illustrating an example of a functional configuration of the node;
FIG. 7 is an explanatory diagram illustrating an example of the operation of the information processing system;
FIG. 8 is an explanatory diagram illustrating coupling relationships between nodes (part 1);
FIG. 9 is an explanatory diagram illustrating coupling relationships between nodes (part 2);
FIG. 10 is an explanatory diagram illustrating coupling relationships between nodes (part 3);
FIG. 11 is an explanatory diagram illustrating coupling relationships between nodes (part 4);
FIG. 12 is an explanatory diagram illustrating an example of update of a route table (part 1);
FIG. 13 is an explanatory diagram illustrating an example of update of the route table (part 2);
FIG. 14 is an explanatory diagram illustrating an example of update of the route table (part 3);
FIG. 15 is an explanatory diagram illustrating an example of update of the route table (part 4);
FIG. 16 is an explanatory diagram illustrating a specific example of route information (part 1);
FIG. 17 is an explanatory diagram illustrating a specific example of route information (part 2);
FIG. 18 is an explanatory diagram illustrating an example of a route search;
FIG. 19 is a flowchart illustrating an example of a first update processing procedure of the node;
FIG. 20 is a flowchart illustrating an example of a second update processing procedure of the node; and
FIG. 21 is a flowchart illustrating an example of a route search processing procedure of the node.

### DESCRIPTION OF EMBODIMENTS

Hereinafter, an embodiment of a management device, a management method, and a management program according to the present disclosure will be described in detail with reference to the drawings.

### (Embodiment)

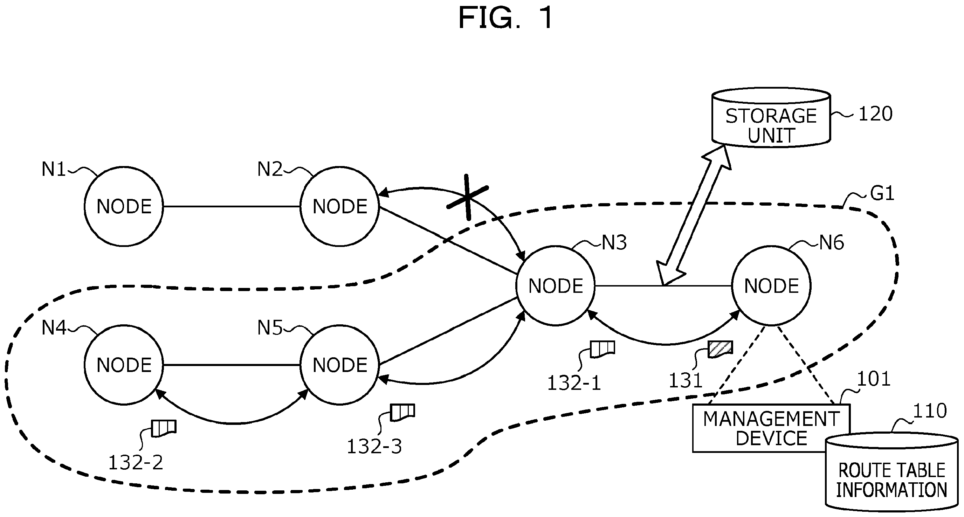

FIG. 1 is an explanatory diagram illustrating an exemplary embodiment of the management method according to the embodiment. In FIG. 1, a management device 101 is a computer that manages route table information 110. The management device 101 corresponds to any node among a plurality of nodes capable of communicating with each other. For example, each of the plurality of nodes is a computer (communication terminal) capable of recording a payment transaction related to a virtual currency transaction. The route table information 110 is information used for a route search from the own node to a node serving as a payment destination. A payment destination is a payment destination in virtual currency.

A framework for visualizing the environmental contribution in a supply chain and returning a consideration for the environmental contribution in virtual currency has been researched and developed. Since an increase in payment fee and a decrease in throughput may be caused in an on-chain transaction in which a transaction is performed using a blockchain, utilization of an off-chain transaction has been studied.

An off-chain transaction is a method in which a transaction is executed outside a blockchain (off-chain) and only the beginning and the end of the transaction are recorded in the blockchain, instead of recording the entire transaction in the blockchain. In a case of an off-chain transaction, reduction of a payment fee and improvement of throughput may be expected.

For example, a mechanism called a payment channel is used for an off-chain transaction. A payment channel is a mechanism for exchanging payment transactions between two parties outside a blockchain (off-chain). In a payment channel, only the beginning and the end of a payment transaction are recorded in a ledger (blockchain).

In a payment channel, a channel is created by paying in advance the total amount of virtual currency exchanged between two parties (for example, 10 bitcoins) in the form of a deposit. A user may process a payment transaction off-chain within the capacity of a deposit.

Meanwhile, as the number of payment destinations (nodes) increases, the burden on a payment source (Sender) for forming a payment channel with each payment destination increases due to a deposit problem. For example, when there are 100 payment destinations, even if the deposit for one channel is 100 bitcoins, the payment source has to make a deposit of 10,000 bitcoins.

For this reason, it is conceivable to form a lightning network that relays a payment process between nodes and perform off-chain payment in which the number of payment channels is reduced. A lightning network is a network of payment channels, and is a mechanism that enables payment between nodes without a direct channel by routing a payment transaction in existing channels.

However, when a route for performing an off-chain transaction is searched for with all nodes in a network as targets, a load applied to the route search increases as the number of nodes in the network increases. For example, when there is too much information on nodes to be referred to at the time of searching, the amount of calculation increases, which does not scale. When there is too little information on nodes to be referred to at the time of searching, there is a case in which a route may not be found.

It is conceivable to share route information stochastically among nodes in a network by a gossip protocol or the like. In this case, since route information is transmitted stochastically, each node does not have information of all nodes in a network, but still a large amount of route information has to be used to search for a route to an objective node, and a load applied to the route search is large.

Accordingly, in the present embodiment, the management method that reduces a load applied to a route search for performing an off-chain transaction will be described. An example of processing by the management device 101 will be described below. In the example of FIG. 1, a plurality of nodes capable of communicating with each other are "nodes N1 to N6", and a node corresponding to the management device 101 is "node N6".

(1) When a coupling relationship between an own node and another node in which a channel capable of off-chain transaction is formed among the nodes N1 to N6 is registered, the management device 101 transmits first route information 131 to the nodes in a first group G1. The first group G1 is a group that includes the own node (node N6 corresponding to the management device 101) and the other node among the nodes N1 to N6.

For example, the first group G1 is formed by nodes respectively corresponding to stakeholders belonging to the same supply chain, and includes a node serving as a payment destination of the own node. In this example, the nodes N3 to N6 are included in the first group G1. For example, a channel capable of off-chain transaction is a payment channel. The first route information 131 represents the registered coupling relationship between the own node and the other node.

For example, when a coupling relationship between the own node and another node in the first group G1 is registered in a storage unit 120, the management device 101 transmits the first route information 131 to the nodes in the first group G1. The storage unit 120 stores a coupling relationship between nodes in which a channel capable of off-chain transaction is formed among the nodes N1 to N6.

For example, a coupling relationship between nodes may be registered in the storage unit 120 by a supplier (stakeholder) or the like who newly participates in a supply chain. For example, the storage unit 120 is included in a computer that is capable of communicating with each of the nodes N1 to N6 and that manages a coupling relationship between nodes in which a channel capable of off-chain transaction is formed among the nodes N1 to N6. However, the storage unit 120 may be included in the management device 101.

A case is assumed in which the coupling relationship between the node N6 (own node) and the node N3 (other node) in the first group G1 is registered. In this case, the management device 101 transmits the first route information 131 representing the coupling relationship between the own node N6 and the other node N3 to the nodes in the first group G1.

(2) When receiving second route information from a first node in the first group G1 that has received the first route information 131, the management device 101 updates the route table information 110 based on the received second route information. Second route information is information representing the coupling relationship between a first node and a node in the first group G1.

For example, when the node N3 in the first group G1 receives the first route information 131, second route information 132-1 is transmitted from the node N3 (first node) to the node N6 (own node). The management device 101 receives the second route information 132-1. For example, the second route information 132-1 represents the coupling relationships between the node N3 and the nodes N5 and N6 in the first group G1.

When the node N4 in the first group G1 receives the first route information 131, second route information 132-2 is transmitted from the node N4 (first node) to the node N6 (own node). The management device 101 receives the second route information 132-2. For example, the second route information 132-2 represents the coupling relationship between the node N4 and the node N5 in the first group G1.

When the node N5 in the first group G1 receives the first route information 131, second route information 132-3 is transmitted from the node N5 (first node) to the node N6 (own node). The management device 101 receives the second route information 132-3. For example, the second route information 132-3 represents the coupling relationships between the node N5 and the nodes N3 and N4 in the first group G1.

In this case, the management device 101 updates the route table information 110 based on the received second route information 132-1 to 132-3. For example, the management device 101 registers, in the route table information 110, the coupling relationships between nodes in the first group G1 identified from the received second route information 132-1 to 132-3.

As described above, when a coupling relationship between the own node and another node is newly registered, the management device 101 may share route information among the nodes in the first group G1 and may update the route table information 110. Accordingly, the management device 101 may suppress the amount of route information to be referred to at the time of a route search to a node serving as a payment destination, to the amount corresponding to the number of coupling relationships between nodes in the first group G1 to which the own node belongs, and may reduce the amount of calculation for a route search and reduce the load.

For example, a case is assumed in which a node serving as a payment destination is the "node N4", and a route from the node N6 to the node N4 is searched for by using an existing breadth-first search. Breadth-first search is a method of searching for an objective node (node serving as a payment destination) by searching in order from the node that is closest to the node from which the search is started. In this case, for example, when a route is searched for with all the nodes N1 to N6 as targets, the search is performed in the order of "N3, N2, N5, N1, N4" from the node N6, and there has to be five steps to find the objective node N4.

By contrast, the coupling relationship between the nodes N1 and N2, which are not included in the first group G1, and the coupling relationship between the nodes N2 and N3 are not registered in the route table information 110. For this reason, the search is performed in the order of "N3, N5, N4" from the node N6 and there are three steps to find the objective node N4, and the amount of calculation for the route search may be reduced even though the number of nodes is the same as a whole (for example, six).

(Example of System Configuration of Information Processing System 200)

Next, an example of a system configuration of an information processing system 200 including the management device 101 illustrated in FIG. 1 will be described. A case in which the management device 101 illustrated in FIG. 1 is applied to each of N1 to Nn (n is a natural number equal to or greater than 2) in the information processing system 200 will be described as an example. For example, the information processing system 200 is applied to a computer system for returning a consideration for the environmental contribution in a supply chain in virtual currency.

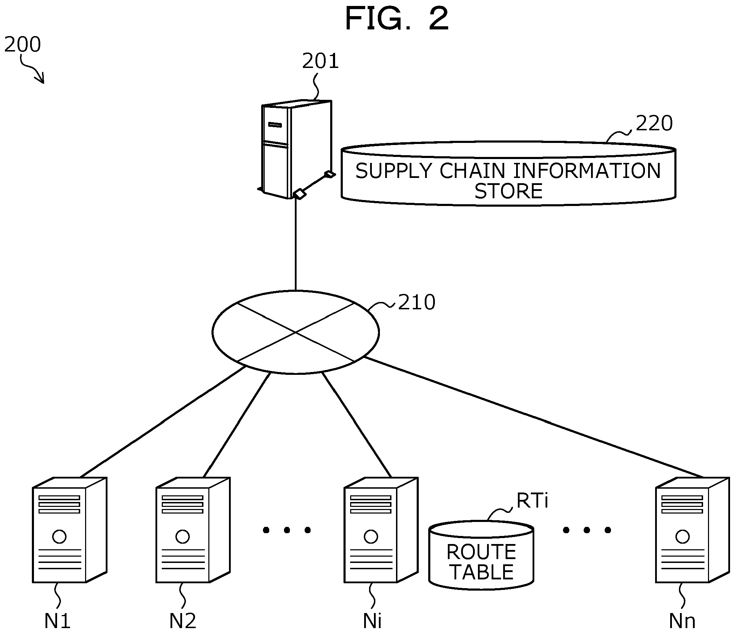

FIG. 2 is an explanatory diagram illustrating an example of a system configuration of the information processing system 200. In FIG. 2, the information processing system 200 includes an information management device 201 and nodes N1 to Nn. In the information processing system 200, the information management device 201 and the nodes N1 to Nn are coupled to each other via a wired or wireless network 210. For example, the network 210 is the Internet, a local area network (LAN), a wide area network (WAN), or the like.

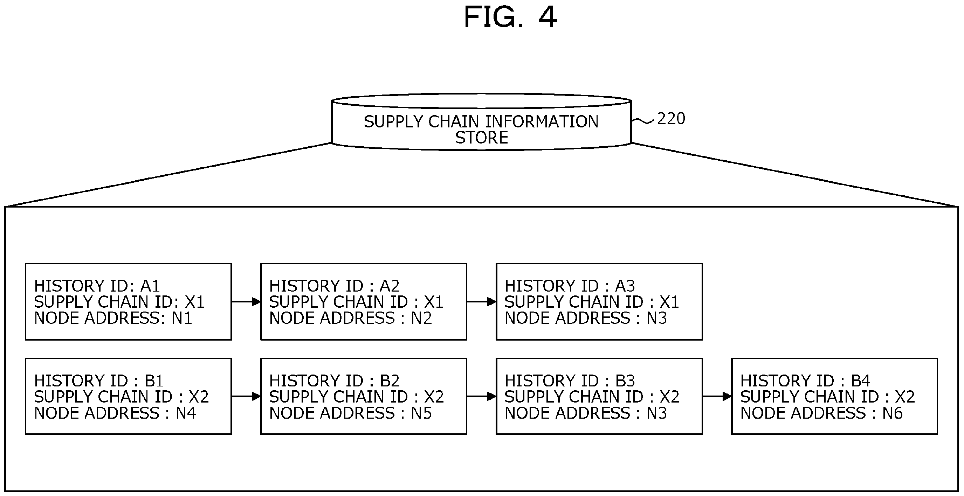

The information management device 201 is a computer that includes a supply chain information store 220 and manages a coupling relationship between nodes in which a channel capable of off-chain transaction is formed among the nodes N1 to Nn. For example, the information management device 201 is a server. For example, the storage unit 120 illustrated in FIG. 1 corresponds to the supply chain information store 220. The storage contents of the supply chain information store 220 will be described later with reference to FIG. 4.

The nodes N1 to Nn are computers used by users of the information processing system 200, and perform route control of a channel for payment. For example, a user is one who performs a virtual currency transaction (for example, an individual person, a company, an organization, or the like). A channel for payment is a channel capable of off-chain transaction. For example, a channel for payment is a payment channel.

In the following description, a given node among the nodes N1 to Nn may be referred to as "node Ni" (i = 1, 2, ..., n).

Each node Ni is capable of recording a blockchain related to a virtual currency transaction. For example, each node Ni includes an encryption key for applying a digital signature to a transaction, a public key for verifying a digital signature of a transaction partner, and the like, and is capable of performing an on-chain transaction by recording a transaction in a blockchain.

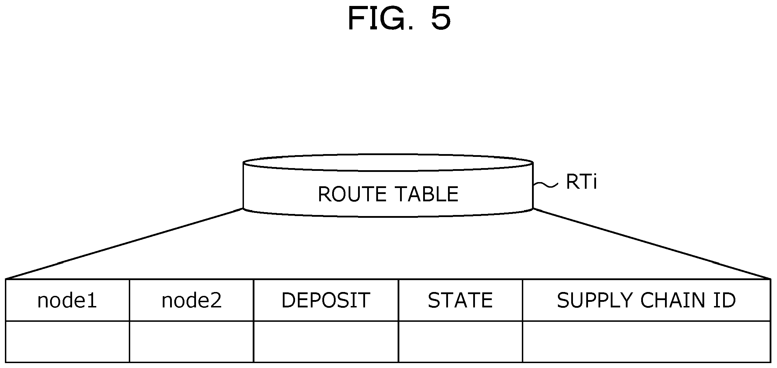

Each node Ni is capable of forming a channel capable of off-chain transaction (for example, a payment channel). Each node Ni includes a route table RTi. The route table RTi is information used for a route search from each node Ni to a node serving as a payment destination. For example, the route table information 110 illustrated in FIG. 1 corresponds to the route table RTi. An example of the data structure of the route table RTi will be described later with reference to FIG. 5.

For example, the node Ni corresponds to a stakeholder belonging to a certain supply chain. For example, a supply chain represents a series of processes (procurement, manufacturing, delivery, sale, and the like) for a certain product to reach a consumer (supply network). A stakeholder is an interested person in a business. For example, a stakeholder is a company, an individual person, or the like. For example, the node Ni is a server, a personal computer (PC), or the like.

Although the information management device 201 is separately provided from the node Ni, this is not the only case. For example, the information management device 201 may be realized by any node N1 among the nodes Ni to Nn.

### (Example of Hardware Configuration of Node Ni)

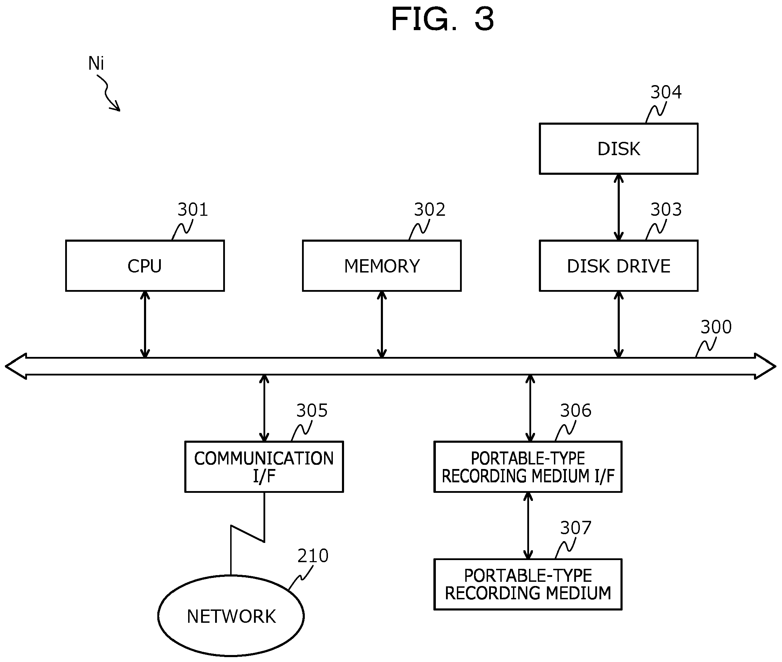

Next, an example of a hardware configuration of the node Ni will be described with reference to FIG. 3.

FIG. 3 is a block diagram illustrating an example of a hardware configuration of the node Ni. In FIG. 3, the node Ni includes a central processing unit (CPU) 301, a memory 302, a disk drive 303, a disk 304, a communication interface (I/F) 305, a portable-type recording medium I/F 306, and a portable-type recording medium 307. These constituent units are coupled to one another via a bus 300.

The CPU 301 controls the entire node Ni. The CPU 301 may include a plurality of cores. For example, the memory 302 includes a read-only memory (ROM), a random-access memory (RAM), a flash ROM, and the like. For example, the flash ROM stores a program of an operating system (OS), the ROM stores application programs, and the RAM is used as a work area for the CPU 301. By loading the program stored in the memory 302 into the CPU 301, the CPU 301 is caused to execute the coded processing.

The disk drive 303 controls reading and writing of data from and to the disk 304 according to the control of the CPU 301. The disk 304 stores data written by the control of the disk drive 303. Examples of the disk 304 include a magnetic disk, an optical disk, and the like.

The communication I/F 305 is coupled to the network 210 through a communication line and coupled to an external computer via the network 210. For example, the external computer is the information management device 201 illustrated in FIG. 2 or another node Nj (j ≠ i, j = 1, 2, ..., n). The communication I/F 305 functions as an interface between the network 210 and the inside of the device, and controls input and output of data from and to the external computer. For example, a modem, a LAN adapter, or the like may be adopted as the communication I/F 305.

The portable-type recording medium I/F 306 controls reading and writing of data from and to the portable-type recording medium 307 according to the control of the CPU 301. The portable-type recording medium 307 stores data written by the control of the portable-type recording medium I/F 306. Examples of the portable-type recording medium 307 include a compact disc (CD)-ROM, a Digital Versatile Disk (DVD), a Universal Serial Bus (USB) memory, and the like.

For example, the node Ni may include an input device, a display, and the like, in addition to the above-described constituent units. For example, the node Ni may be made not to include the portable-type recording medium I/F 306 and the portable-type recording medium 307 of the above-described constituent units. The information management device 201 illustrated in FIG. 2 may be realized by a hardware configuration similar to that of the node Ni.

### (Storage Contents of Supply Chain Information Store 220)

Next, the storage contents of the supply chain information store 220 included in the information management device 201 will be described with reference to FIG. 4.

FIG. 4 is an explanatory diagram illustrating an example of the storage contents of the supply chain information store 220. In FIG. 4, the supply chain information store 220 stores supply chain history information (for example, supply chain history information A1 to A3 and B1 to B4). Supply chain history information includes a history ID, a supply chain ID, and a node address.

A history ID is an identifier for identifying supply chain history information. A supply chain ID is an identifier for identifying a supply chain. A node address is an address of the node Ni corresponding to a stakeholder belonging to a supply chain. For example, supply chain history information is registered by a supplier.

For example, the supply chain history information A1 indicates the node address "N1" of the node N1 corresponding to a stakeholder belonging to a supply chain X1. The supply chain history information A2 indicates the node address "N2" of the node N2 corresponding to a stakeholder belonging to the supply chain X1.

In the following description, a node corresponding to a stakeholder belonging to a supply chain may be referred to as a "node belonging to a supply chain".

The supply chain history information A2 is stored in association with the supply chain history information A1. The supply chain history information A1 and the supply chain history information A2 represent the coupling relationship between the nodes N1 and N2 (stakeholders) belonging to the supply chain X1. For example, the coupling relationship between the nodes N1 and N2 is registered when a transaction is performed between the nodes N1 and N2.

For example, in the information processing system 200, when the supply chain history information A2 is registered in association with the supply chain history information A1, the information management device 201 transmits a registration notification to the nodes N1 and N2. A registration notification is a notification representing a newly registered coupling relationship between nodes. For example, a registration notification includes a supply chain ID and the node addresses of the nodes N1 and N2. Accordingly, the nodes N1 and N2 may each detect that the coupling relationship between the own node and another node belonging to the same supply chain is newly registered.

### (Example of Data Structure of Route Table RTi)

Next, an example of the data structure of the route table RTi included in the node Ni will be described with reference to FIG. 5. For example, the route table RTi is realized by a storage device such as the memory 302 or the disk 304 illustrated in FIG. 3.

FIG. 5 is an explanatory diagram illustrating an example of the data structure of a route table. In FIG. 5, the route table RTi includes the fields of node1, node2, deposit, state, and supply chain ID, and stores route information as a record by setting information in each field.

node1 and node2 indicate the node addresses of two nodes having a coupling relationship in which a channel capable of off-chain transaction is formed. Deposit indicates the total amount of virtual currency exchanged between nodes via a channel. State indicates the state of a channel. For example, Open or Close is set as state.

The state "Open" indicates that a channel is valid. The state "Close" indicates that a channel is invalid. A supply chain ID is an identifier for identifying a supply chain to which two nodes (stakeholders) having a coupling relationship belong. In FIG. 5, the storage contents of the route table RTi in an initial state is illustrated.

### (Example of Functional Configuration of Node Ni)

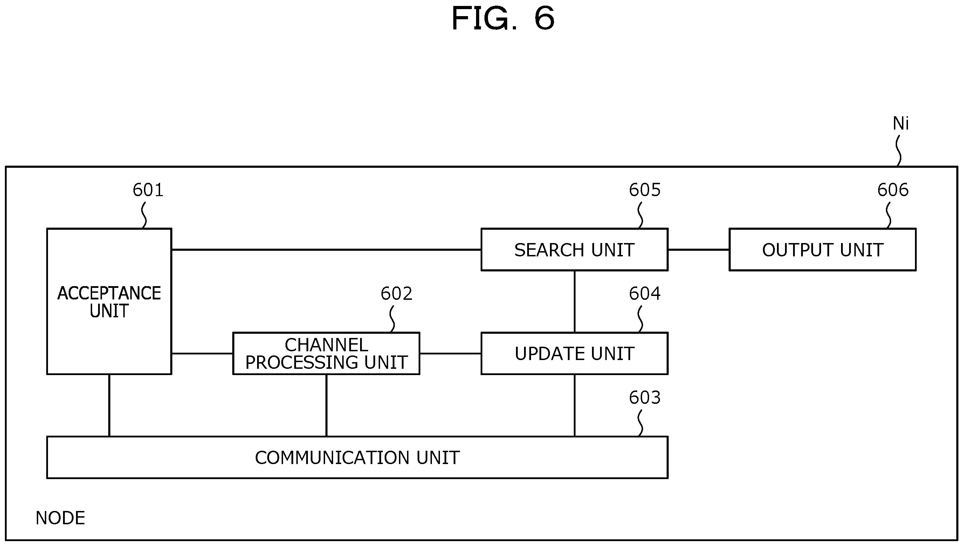

FIG. 6 is a block diagram illustrating an example of a functional configuration of the node Ni. In FIG. 6, the node Ni includes an acceptance unit 601, a channel processing unit 602, a communication unit 603, an update unit 604, a search unit 605, and an output unit 606. The acceptance unit 601 to the output unit 606 are the functions constituting a control unit. For example, the functions are implemented by the communication I/F 305 or by causing the CPU 301 to execute a program stored in a storage device such as the memory 302, the disk 304, or the portable-type recording medium 307 illustrated in FIG. 3. For example, the processing results obtained by the functional units are stored in a storage device such as the memory 302 or the disk 304.

The acceptance unit 601 accepts a registration notification indicating that a coupling relationship between the own node and another node in a first group among the nodes N1 to Nn capable of communicating with each other has been registered. A coupling relationship is a coupling relationship between nodes in which a channel capable of off-chain transaction (for example, a payment channel) is formed.

The first group is a group formed by one or more nodes included in the nodes N1 to Nn. For example, the first group is formed by nodes respectively corresponding to stakeholders belonging to the same supply chain, and includes a node serving as a payment destination of the own node (node Ni).

For example, a registration notification includes a supply chain ID and the node addresses of nodes (own node and another node) whose coupling relationship is registered. A supply chain ID is an identifier for identifying a supply chain to which an own node and another node whose coupling relationship is registered belong. A supply chain corresponds to the first group. For example, a registration notification is given when an off-chain transaction is performed between nodes.

For example, the acceptance unit 601 receives a registration notification from the information management device 201 illustrated in FIG. 2, and thus accepts the received registration notification. The acceptance unit 601 may accept a registration notification through user operation input using an unillustrated input device. Accordingly, the node Ni may detect that the coupling relationship between the own node and another node in which a channel capable of off-chain transaction is formed is registered.

The channel processing unit 602 forms a channel capable of off-chain transaction between an own node and another node. For example, a channel capable of off-chain transaction is a payment channel. For example, the channel processing unit 602 forms a channel between an own node and another node identified from an accepted registration notification.

As a technique of forming a channel capable of off-chain transaction, any known technique may be used. A registration notification may indicate that a channel capable of off-chain transaction has been formed between an own node and another node. For example, when the node Ni accepts a registration notification, a channel may be already formed between the own node and another node. In this case, the channel processing unit 602 omits the process of forming a channel.

When a coupling relationship between an own node and another node in which a channel capable of off-chain transaction is formed among the nodes N1 to Nn is registered, the communication unit 603 transmits first route information to the nodes in a first group. First route information represents the registered coupling relationship between the own node and the other node. For example, first route information includes the node address of an own node, the node address of another node, and a supply chain ID.

A supply chain ID is an identifier of a supply chain to which an own node and another node belong, and corresponds to an identifier for identifying a first group. For example, when a channel is formed between an own node and another node, first route information includes information on deposit in the channel. A deposit indicates the total amount of virtual currency exchanged between nodes via a channel.

For example, when accepting a registration notification, the communication unit 603 designates the supply chain ID included in the registration notification as a destination, and transmits first route information representing a coupling relationship between an own node and another node identified from the registration notification (multicast). By designating a supply chain ID as a destination, first route information may be transmitted to the nodes in the first group (supply chain).

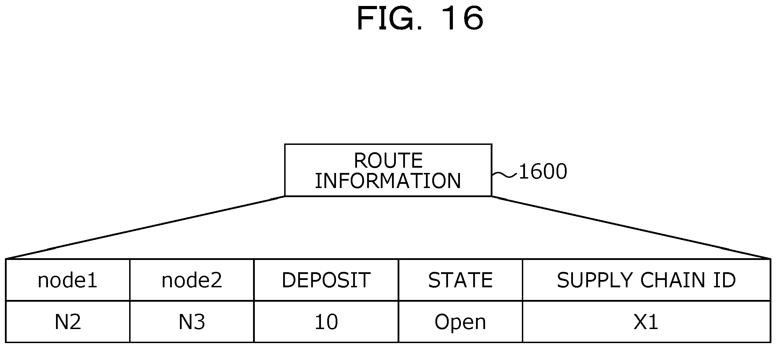

For example, when a channel is formed between an own node and another node based on a registration notification, the communication unit 603 designates a supply chain ID as a destination and transmits first route information (including information on deposit). A specific example of first route information will be described later with reference to FIG. 16.

However, a channel between an own node and another node may be formed at arbitrary timing after a registration notification is accepted. In this case, for example, in response to a registration notification, the communication unit 603 performs first transmission of first route information (not including information on deposit) to the nodes in the first group. In response to the formation of a channel between an own node and another node, the communication unit 603 may perform second transmission of first route information (including information on deposit) to the nodes in the first group.

The communication unit 603 receives, from a first node in the first group that has received first route information, second route information representing a coupling relationship between the first node and a node in the first group. For example, second route information includes the node address of a first node, the node address of a coupling node, and a supply chain ID. A coupling node is a node having a coupling relationship with a first node.

A supply chain ID is an identifier of a supply chain to which a first node and a coupling node belong, and corresponds to an identifier for identifying a first group. For example, when a channel is formed between a first node and a coupling node, second route information includes information on deposit in the channel.

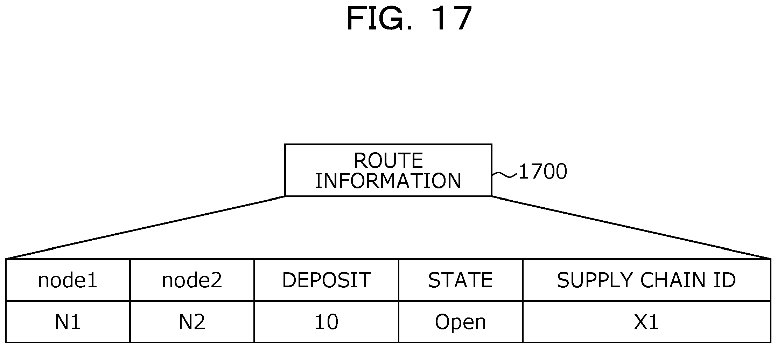

Second route information corresponds to a response from a node in the first group to first route information transmitted from an own node. For example, when receiving route information for which only the node address of an own node is designated as a destination, the communication unit 603 may determine that the route information is second route information (a response to first route information transmitted by the own node). However, the communication unit 603 does not have to determine whether the received route information is second route information. The nodes in the first group (for example, a supply chain ID) may be designated as the destination of second route information. A specific example of second route information will be described later with reference to FIG. 17.

The update unit 604 updates the route table RTi based on the received second route information. The route table RTi is information used in a route search from an own node to a node serving as a payment destination in the first group. For example, a node serving as a payment destination is a node that belongs to a supply chain to which an own node belongs (first group), and is a node serving as a payment destination of a consideration for the environmental contribution.

For example, the update unit 604 registers, in the route table RTi, the coupling relationship between the nodes in the first group identified from the received second route information. For example, the update unit 604 registers, in the route table RTi, the supply chain ID included in the second route information in association with the node address of the first node (node1) and the node address of the coupling node (node2) included in the second route information.

The update unit 604 sets the information on deposit included in the second route information in association with the node address of the first node (node1) and the node address of the coupling node (node2), and sets the state "Open". Accordingly, new route information is registered as a record in the route table RTi.

There is a case in which information on deposit is not included in second route information. In this case, the update unit 604 sets "Close" as the state in route information. After that, when receiving route information for the first node and the coupling node including information on deposit, the update unit 604 sets the information on deposit in the route information and changes the state to "Open".

For example, in response to the transmission of first route information, the update unit 604 may update the route table RTi based on the first route information. For example, the update unit 604 may register, in the route table RTi, the coupling relationship between the own node and another node in the first group identified from the first route information. However, route information (second route information) with similar contents is transmitted from the other node whose coupling relationship with the own node is registered. As a result, in the own node, the route table RTi is updated based on the route information (second route information). Accordingly, update based on first route information does not have to be performed.

The communication unit 603 receives third route information representing a coupling relationship between a second node in the first group and a third node in the first group, which is transmitted from the second node (or the third node) in response to the registration of the coupling relationship. For example, third route information includes the node address of a second node, the node address of a third node, and a supply chain ID.

A supply chain ID is an identifier of a supply chain to which a second node and a third node belong, and corresponds to an identifier for identifying a first group. When a channel is formed between a second node and a third node, third route information may include information on deposit in the channel.

For example, when receiving route information for which the supply chain ID of the own node is designated as a destination, the communication unit 603 may determine that the route information is third route information (route information to be transmitted when a coupling relationship between nodes in the first group is newly registered).

The update unit 604 updates the route table RTi based on the received third route information. For example, the update unit 604 registers, in the route table RTi, the coupling relationship between the nodes in the first group identified from the received third route information. For example, the update unit 604 registers, in the route table RTi, the supply chain ID included in the third route information in association with the node address of the second node (node1) and the node address of the third node (node2) included in the third route information.

The update unit 604 sets the information on deposit included in the third route information in association with the node address of the second node (node1) and the node address of the third node (node2), and sets the state "Open". Accordingly, new route information is registered as a record in the route table RTi.

There is a case in which information on deposit is not included in third route information. In this case, the update unit 604 sets "Close" as the state in route information. After that, when receiving route information for the second node and the third node including information on deposit, the update unit 604 sets the information on deposit in the route information and changes the state to "Open".

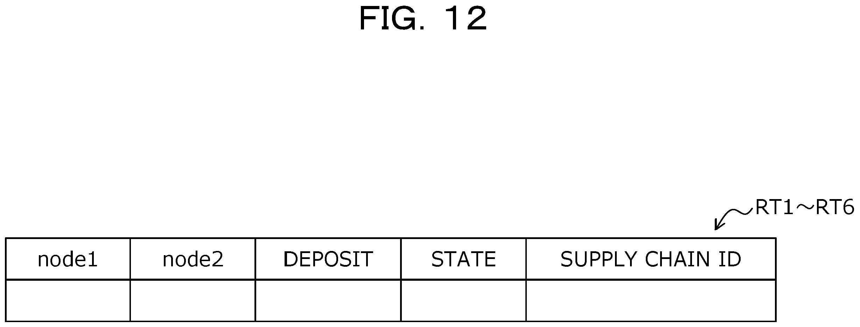

An example of update of the route table RTi will be described later with reference to FIGs. 12 to 15.

When receiving third route information from the second node (or the third node), the communication unit 603 transmits, to the second node (or the third node), fourth route information representing a coupling relationship between the own node and another node in the first group by referring to the route table RTi.

For example, when receiving third route information, the communication unit 603 refers to the route table RTi and acquires, as fourth route information, route information corresponding to the supply chain ID included in the third route information and representing a coupling relationship between the own node and another node. For example, when a channel is formed between the own node and another node, fourth route information includes information on deposit in the channel. Fourth route information may include route information representing a coupling relationship between nodes other than the own node in the same supply chain.

The communication unit 603 designates the node address of the second node (or the third node) which is the transmission source address of the third route information, and transmits the acquired fourth route information. However, the nodes in the first group (for example, a supply chain ID) may be designated as the destination of fourth route information.

The acceptance unit 601 accepts a search request for a route from the own node to a node serving as a payment destination. For example, a search request includes the node address of a node serving as a payment destination and a supply chain ID of a supply chain to which the own node and the node serving as a payment destination belong. A search request may include a payment amount in a transaction exchanged between nodes.

For example, the acceptance unit 601 receives a search request from the computer (for example, PC) of a stakeholder corresponding to the own node, and thus accepts the received search request. The acceptance unit 601 may accept a search request through user operation input using an unillustrated input device.

When accepting a search request, the search unit 605 refers to the route table RTi and searches for a route from the own node to a node serving as a payment destination based on the coupling relationship between nodes in the first group. For example, the search unit 605 refers to the route table RTi and identifies the route information corresponding to the supply chain ID included in the search request.

By using an existing search algorithm such as breadth-first search, the search unit 605 refers to the identified route information and searches for a route to reach a node serving as a payment destination from the own node via nodes in the first group. The node serving as a payment destination is identified from the node address of the node serving as a payment destination included in the search request. At this time, for example, the search unit 605 may refer to the information on deposit in the identified route information and search for a route in which the payment amount does not exceed the deposit.

The output unit 606 outputs a route search result. A route search result is information for identifying the route searched for. For example, a route search result includes information on nodes via which a node serving as a payment destination is reached from an own node (node addresses or the like). Examples of the way of output by the output unit 606 include storing in a storage device such as the memory 302 or the disk 304, transmitting to another computer via the communication I/F 305, and the like.

Accordingly, the output unit 606 may output information on a route usable for a transaction with a node (payment destination node) in which a channel is not directly formed with the own node. For example, the node Ni may perform a transaction with a node (payment destination node) in which a channel is not directly formed with the own node by performing route control to the node serving as a payment destination based on a route search result. By transmitting a route search result to a PC or the like of a user (stakeholder) corresponding to the own node, the node Ni may cause the user to confirm a route to be used for a transaction.

### (Example of Operation of Information Processing System 200)

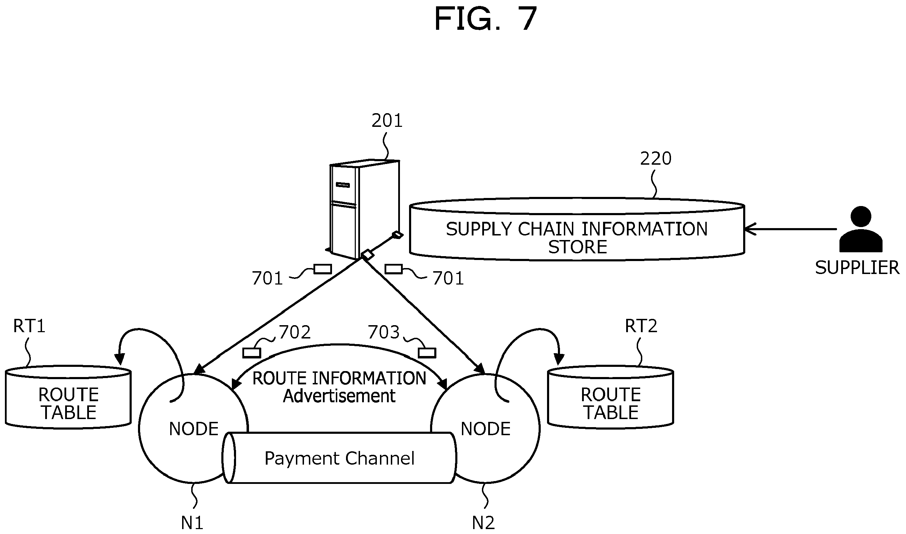

Next, an example of the operation of the information processing system 200 will be described with reference to FIG. 7. A case is assumed in which a channel capable of off-chain transaction is formed between the nodes N1 and N2 among the nodes N1 to Nn.

FIG. 7 is an explanatory diagram illustrating an example of the operation of the information processing system 200. In FIG. 7, when the coupling relationship between the nodes N1 and N2 is registered in the supply chain information store 220, the information management device 201 transmits a registration notification 701 to the nodes N1 and N2. For example, the registration notification 701 includes a supply chain ID and the node addresses of the nodes N1 and N2. For example, the coupling relationship between the nodes N1 and N2 is registered by a supplier.

An example of the operation of the node N1 will be described below. However, the operation performed by the node N2 is similar to the operation performed by the node N1.

In response to the registration notification 701 from the information management device 201, the node N1 forms a channel (payment channel) between the own node and the other node N2 identified from the registration notification 701. Accordingly, a channel capable of off-chain transaction is formed between the nodes N1 and N2.

The node N1 transmits route information 702 (corresponding to first route information) to the nodes in a first group. The first group is a group including the nodes N1 and N2. For example, the first group is identified by the supply chain ID included in the registration notification 701. The route information 702 is information representing the coupling relationship between the nodes N1 and N2, and includes a supply chain ID and the node addresses of the nodes N1 and N2. The route information 702 includes information on deposit in the channel between the nodes N1 and N2.

When receiving route information 703 (corresponding to second route information) from the node N2 that has received the route information 702, the node N1 updates the route table RT1 based on the received route information 703. The route information 703 includes the node address of the node N2, the node address of a coupling node having a coupling relationship with the node N2 (for example, the node N1), and a supply chain ID. The route information 703 includes information on deposit in the channel between the node N2 and the coupling node.

Accordingly, the node N1 may register, in the route table RT1, route information representing a coupling relationship between nodes (for example, between the nodes N1 and N2) in the first group.

### (Example of Update of Route Table RTi)

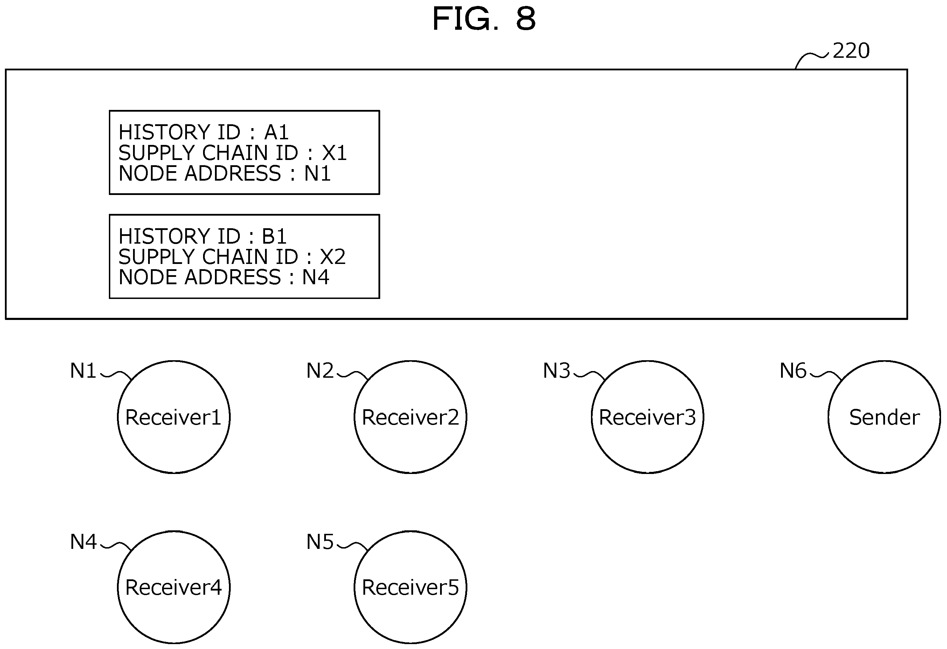

Next, an example of update of the route table RTi will be described with reference to FIGs. 8 to 17.

FIGs. 8 to FIG. 11 are explanatory diagrams illustrating coupling relationships between nodes. FIGs. 12 to 15 are explanatory diagrams illustrating an example of update of the route table RTi. In FIG. 8, the nodes N1 to N6 are illustrated. The nodes N1 to N5 are "Receivers 1 to 5 (nodes serving as payment destinations)", and the node N6 is "Sender (node serving as a payment source)".

At this point, the supply chain history information A1 and the supply chain history information B1 are recorded in the supply chain information store 220, and coupling relationships between nodes are not registered. For this reason, as illustrated in FIG. 12, the storage contents of the route tables RT1 to RT6 included in the nodes N1 to N6 at this point are empty.

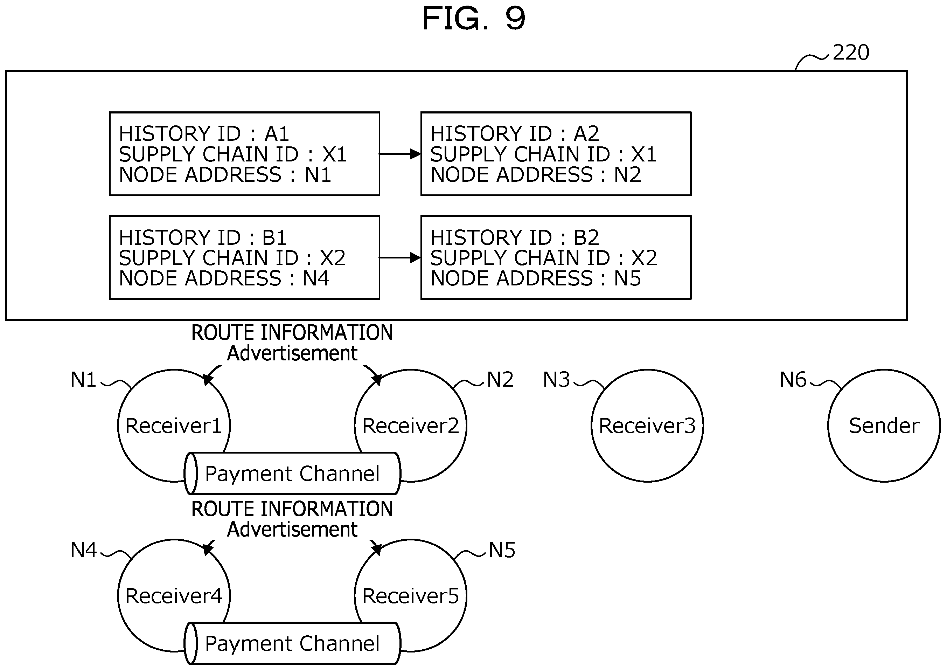

In FIG. 9, the supply chain history information A2 is recorded in the supply chain information store 220 in association with the supply chain history information A1, and the coupling relationship between the nodes N1 and N2 is newly registered (the node N2 is added to the supply chain X1 (first group)). In this case, the nodes N1 and N2 form a channel between the nodes N1 and N2.

The nodes N1 and N2 designate the supply chain ID "X1" and transmit route information (route information Advertisement). When receiving the route information for which the supply chain ID "X1" is designated, the nodes N1 and N2 update the route tables RT1 and RT2 based on the received route information.

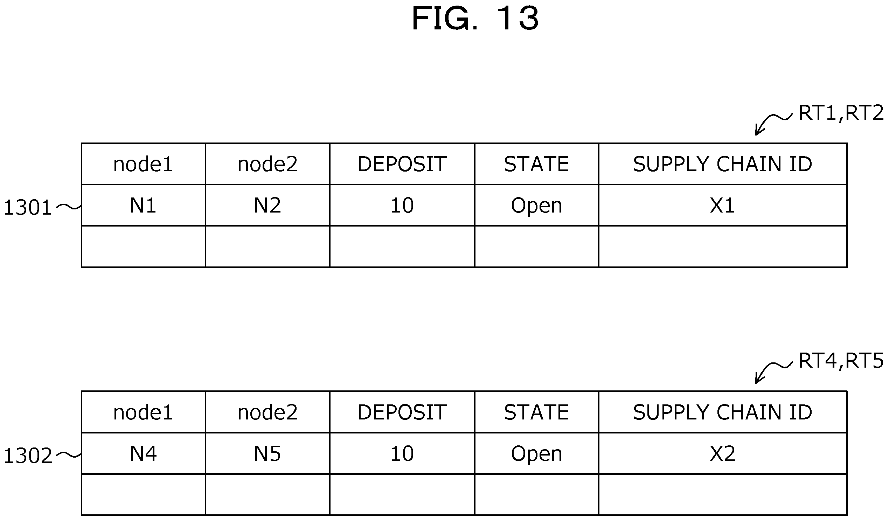

As a result, as illustrated in FIG. 13, route information 1301 is registered in the route tables RT1 and RT2 of the nodes N1 and N2. The route information 1301 is information representing the coupling relationship between the nodes N1 and N2, and includes information on deposit.

In FIG. 9, the supply chain history information B2 is recorded in the supply chain information store 220 in association with the supply chain history information B1, and the coupling relationship between the nodes N4 and N5 is newly registered (the node N5 is added to the supply chain X2 (first group)). In this case, the nodes N4 and N5 form a channel between the nodes N4 and N5.

The nodes N4 and N5 designate the supply chain ID "X2" and transmit route information (route information Advertisement). When receiving the route information for which the supply chain ID "X2" is designated, the nodes N4 and N5 update the route tables RT4 and RT5 based on the received route information.

As a result, as illustrated in FIG. 13, route information 1302 is registered in the route tables RT4 and RT5 of the nodes N4 and N5. The route information 1302 is information representing the coupling relationship between the nodes N4 and N5, and includes information on deposit. The route tables RT3 and RT6 of the nodes N3 and N6 remain empty.

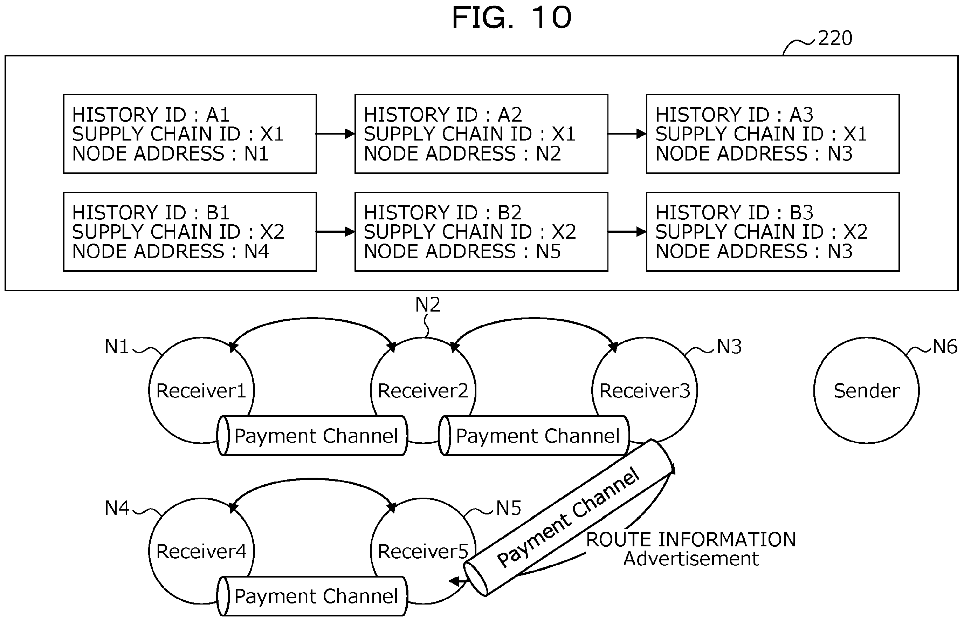

In FIG. 10, the supply chain history information A3 is recorded in the supply chain information store 220 in association with the supply chain history information A2, and the coupling relationship between the nodes N2 and N3 is newly registered (the node N3 is added to the supply chain X1). In this case, the nodes N2 and N3 form a channel between the nodes N2 and N3.

The nodes N2 and N3 designate the supply chain ID "X1" and transmit route information (for example, see FIG. 16 to be described later). When receiving the route information for which the supply chain ID "X1" is designated, the nodes N1 to N3 update the route tables RT1 to RT3 based on the received route information.

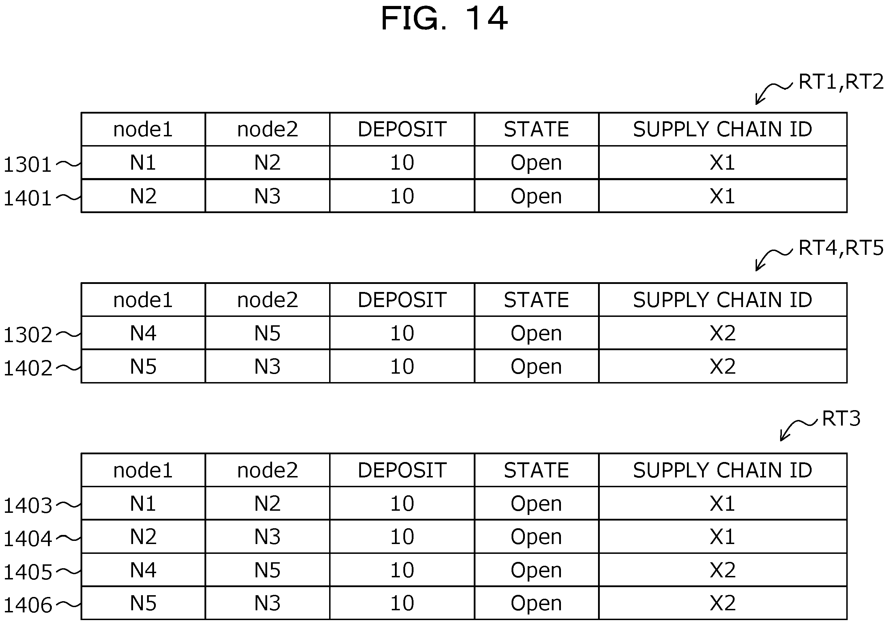

As a result, as illustrated in FIG. 14, route information 1401 is registered in the route tables RT1 and RT2 of the nodes N1 and N2. The route information 1401 is information representing the coupling relationship between the nodes N2 and N3, and includes information on deposit. Route information 1404 is registered in the route table RT3 of the node N3. The route information 1404 is information representing the coupling relationship between the nodes N2 and N3, and includes information on deposit.

When receiving the route information for which the supply chain ID "X1" is designated, the nodes N1 to N3 refer to the route tables RT1 to RT3 and transmit route information representing a coupling relationship between the own node and another node in the supply chain X1 (for example, see FIG. 17 to be described later). As the destination of the route information, the node addresses of the nodes N2 and N3 (the transmission sources of the route information for which the supply chain ID "X1" is designated) may be designated, or the supply chain ID "X1" may be designated.

A specific example of route information that is transmitted from the node N3 by designating the supply chain ID "X1" when the coupling relationship between the nodes N2 and N3 is newly registered will be described with reference to FIG. 16.

FIG. 16 is an explanatory diagram illustrating a specific example of route information (part 1). In FIG. 16, route information 1600 is information representing the newly registered coupling relationship between the nodes N2 and N3, and includes information on node1, node2, deposit, state, and supply chain ID.

node1 and node2 indicate the node addresses of the nodes N2 and N3. Deposit indicates the total amount of virtual currency exchanged between the nodes N2 and N3 via the channel. State indicates the state of a channel. A supply chain ID is an identifier of a supply chain to which the nodes N2 and N3 belong.

Next, a specific example of route information that is transmitted from the node N1 when receiving the route information 1600 transmitted from the node N3 will be described with reference to FIG. 17.

FIG. 17 is an explanatory diagram illustrating a specific example of route information (part 2). In FIG. 17, route information 1700 is information representing the coupling relationship between the nodes N1 and N2 in the supply chain X1, and includes information on node1, node2, deposit, state, and supply chain ID.

node1 and node2 indicate the node addresses of the nodes N1 and N2. Deposit indicates the total amount of virtual currency exchanged between the nodes N1 and N2 via a channel. State indicates the state of a channel. A supply chain ID is an identifier of the supply chain to which the nodes N1 and N2 belong.

When receiving the route information 1700 transmitted from the node N1, the node N3 updates the route table RT3 based on the received route information 1700. As a result, as illustrated in FIG. 14, route information 1403 is registered in the route table RT3 of the node N3. The route information 1403 is information representing the coupling relationship between the nodes N1 and N2, and includes information on deposit.

In FIG. 10, the supply chain history information B3 is recorded in the supply chain information store 220 in association with the supply chain history information B2, and the coupling relationship between the nodes N3 and N5 is newly registered (the node N3 is added to the supply chain X2). In this case, the nodes N3 and N5 form a channel between the nodes N3 and N5.

The nodes N3 and N5 designate the supply chain ID "X2" and transmit route information. When receiving the route information for which the supply chain ID "X2" is designated, the nodes N3 to N5 update the route tables RT3 to RT5 based on the received route information.

As a result, as illustrated in FIG. 14, route information 1402 is registered in the route tables RT4 and RT5 of the nodes N4 and N5. The route information 1402 is information representing the coupling relationship between the nodes N3 and N5, and includes information on deposit. Route information 1406 is registered in the route table RT3 of the node N3. The route information 1406 is information representing the coupling relationship between the nodes N3 and N5, and includes information on deposit.

When receiving the route information for which the supply chain ID "X2" is designated, the nodes N3 to N5 refer to the route tables RT3 to RT5 and transmit route information representing a coupling relationship between the own node and another node in the supply chain X2. As the destination of the route information, the node addresses of the nodes N3 and N5 (the transmission sources of the route information for which the supply chain ID "X2" is designated) may be designated, or the supply chain ID "X2" may be designated.

For example, when receiving the route information transmitted from the nodes N4 and N5, the node N3 updates the route table RT3 based on the received route information. As a result, as illustrated in FIG. 14, route information 1405 is registered in the route table RT3 of the node N3. The route information 1405 is information representing the coupling relationship between the nodes N4 and N5, and includes information on deposit.

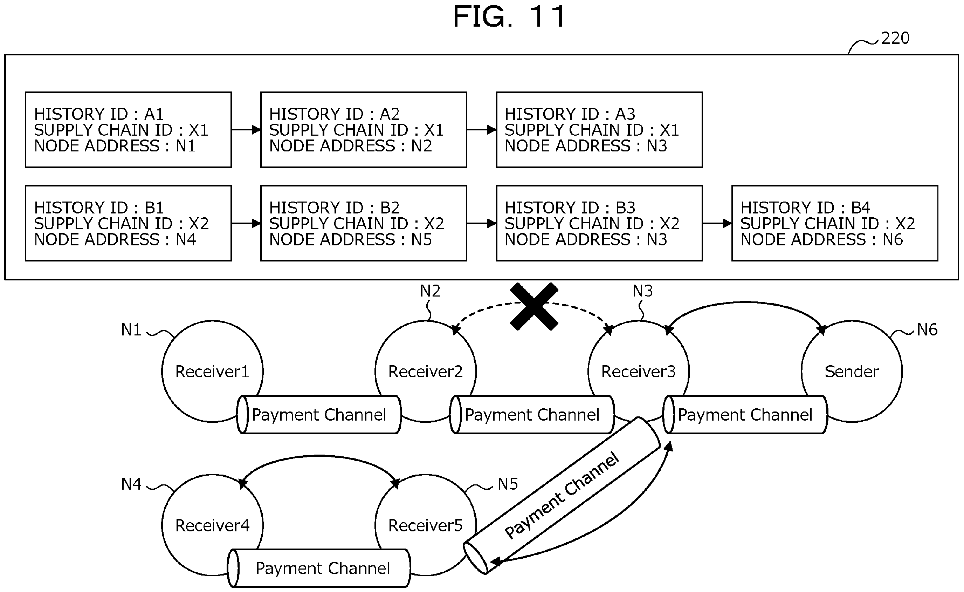

In FIG. 11, the supply chain history information B4 is recorded in the supply chain information store 220 in association with the supply chain history information B3, and the coupling relationship between the nodes N3 and N6 is newly registered (the node N6 is added to the supply chain X2). In this case, the nodes N3 and N6 form a channel between the nodes N3 and N6.

The nodes N3 and N6 designate the supply chain ID "X2" and transmit route information. This route information is discarded in the nodes N1 and N2 having a different supply chain ID, and is not reflected in the route tables RT1 and RT2. When receiving the route information for which the supply chain ID "X2" is designated, the nodes N3 to N6 update the route tables RT3 to RT6 based on the received route information.

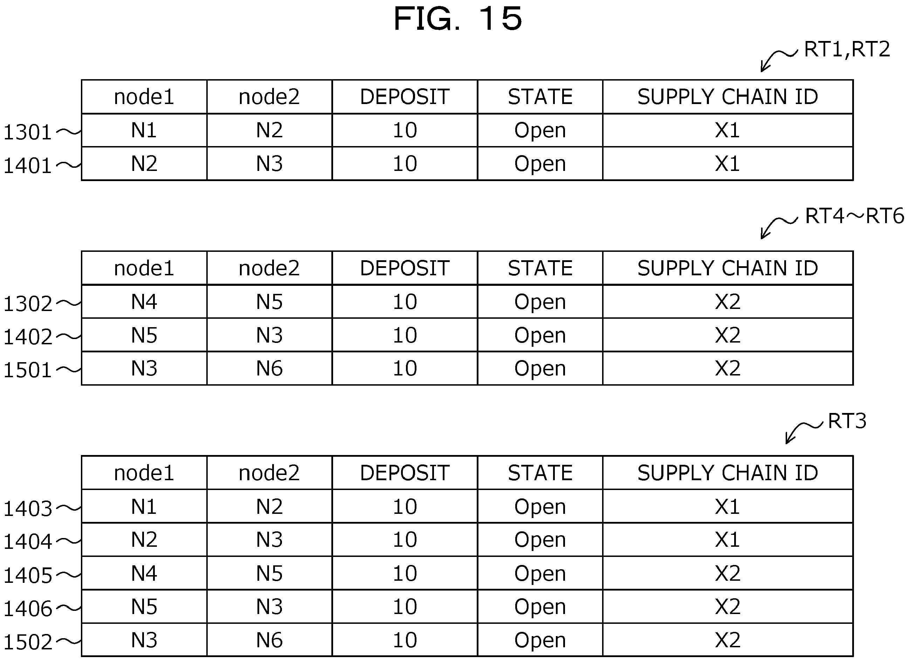

As a result, as illustrated in FIG. 15, route information 1501 is registered in the route tables RT4 to RT6 of the nodes N4 to N6. The route information 1501 is information representing the coupling relationship between the nodes N3 and N6, and includes information on deposit. Route information 1502 is registered in the route table RT3 of the node N3. The route information 1502 is information representing the coupling relationship between the nodes N3 and N6, and includes information on deposit.

When receiving the route information for which the supply chain ID "X2" is designated, the nodes N4 to N6 refer to the route tables RT4 to RT6 and transmit route information representing a coupling relationship between the own node and another node in the supply chain X2. As the destination of the route information, the node addresses of the nodes N3 and N6 (the transmission sources of the route information for which the supply chain ID "X2" is designated) may be designated, or the supply chain ID "X2" may be designated.

For example, when receiving the route information transmitted from the nodes N3 to N5, the node N6 updates the route table RT6 based on the received route information. As a result, as illustrated in FIG. 15, the route information 1302 and the route information 1402 are registered in the route table RT6 of the node N6.

### (Example of Route Search)

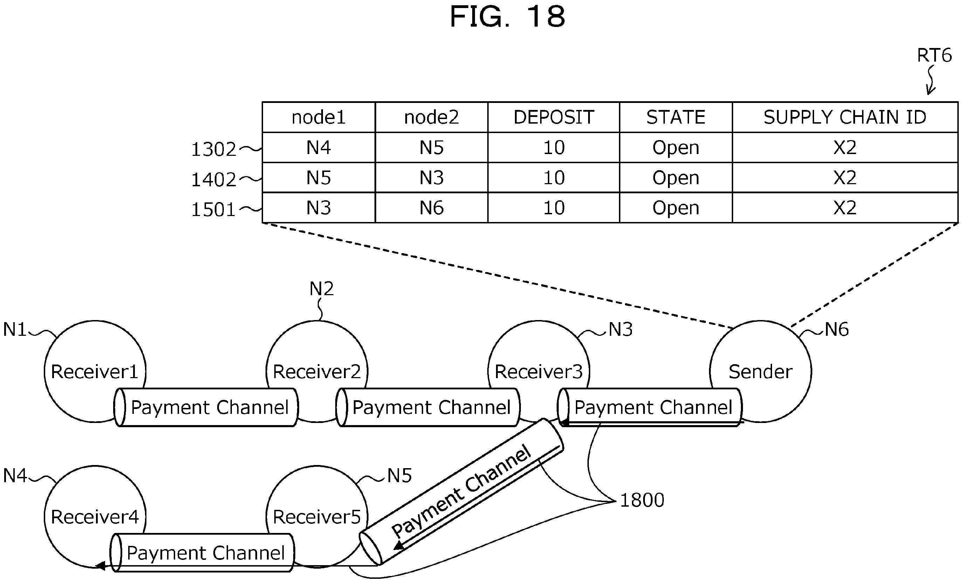

Next, an example of a route search will be described with reference to FIG. 18.

FIG. 18 is an explanatory diagram illustrating an example of a route search. In FIG. 18, the node N6 is "Sender (node serving as a payment source)", and the node N4 is "Receiver 4 (node serving as a payment destination)". A case is assumed in which the node N6 accepts a search request including the node address of the node N4 serving as a payment destination and the supply chain ID "X2".

In this case, the node N6 refers to the route table RT6, and identifies the route information 1302, the route information 1402, and the route information 1501 corresponding to the supply chain ID "X2" included in the search request. By using an existing search algorithm such as breadth-first search, the node N6 refers to the identified route information 1302, route information 1402, and route information 1501, and searches for a route to reach the node N4 serving as a payment destination from the own node.

The node serving as a payment destination is identified from the node address of the node serving as a payment destination included in the search request. At this time, for example, the node N6 may refer to the information on deposit in the route information 1302, the route information 1402, and the route information 1501, and search for a route in which the payment amount does not exceed the deposit. A case is assumed in which the payment amount does not exceed the deposit.

In this case, a route 1800 to reach the node N4 (payment destination node) from the node N6 via the nodes N3 and N5 in the supply chain X2 is searched for. As described above, the node N6 may suppress the amount of route information to be referred to at the time of a route search, to the amount corresponding to the number of coupling relationships between nodes in the supply chain X2.

### (Various Processing Procedures of Node Ni)

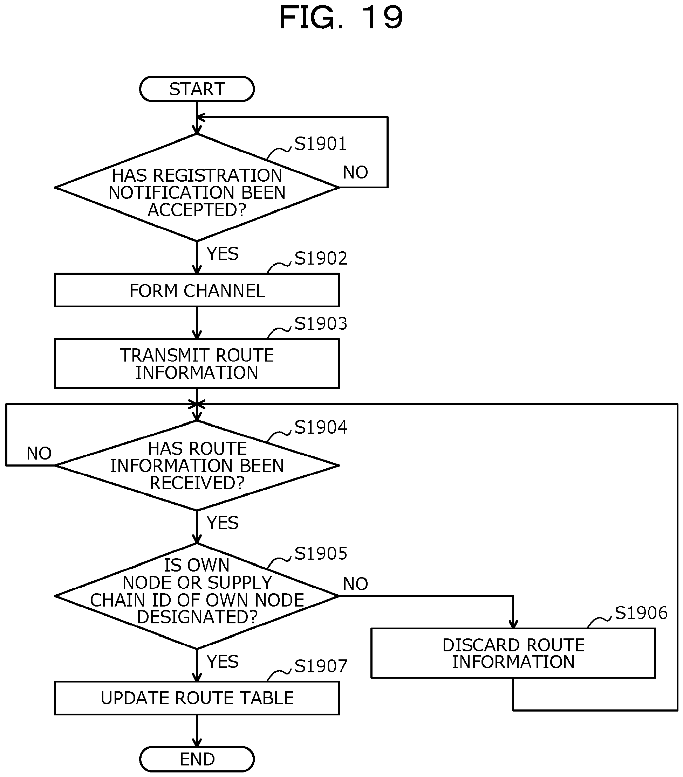

Next, various processing procedures of the node Ni will be described. First, a first update processing procedure of the node Ni will be described with reference to FIG. 19.

FIG. 19 is a flowchart illustrating an example of the first update processing procedure of the node Ni. In FIG. 19, first, the node Ni determines whether a registration notification has been accepted from the information management device 201 (step S1901). The node Ni waits for acceptance of the registration notification (step S1901: No).

When the registration notification has been accepted (step S1901: Yes), the node Ni forms a channel (payment channel) between the own node and another node identified from the registration notification (step S1902). The node Ni designates the supply chain ID included in the registration notification as a destination, and transmits route information representing a coupling relationship between the own node and another node identified from the registration notification (step S1903). The route information to be transmitted corresponds to first route information.

Next, the node Ni determines whether route information has been received from any node of the nodes N1 to Nn (step S1904). The node Ni waits for reception of the route information (step S1904: No). The route information to be received corresponds to second route information.

When the route information has been received (step S1904: Yes), the node Ni determines whether the own node or the supply chain ID of the own node is designated as the destination of the route information (step S1905). When the own node or the supply chain ID of the own node is not designated (step S1905: No), the node Ni discards the received route information (step S1906), and returns to step S1904.

On the other hand, when the own node or the supply chain ID of the own node is designated (step S1905: Yes), the node Ni updates the route table RTi based on the received route information (step S1907), and ends the series of processes in the flowchart.

Accordingly, when a coupling relationship between the own node and another node is newly registered, the node Ni may share route information representing the coupling relationship among the nodes in the same supply chain, and may update the route table RTi. For example, when a coupling relationship between the own node and another node is newly registered, the node Ni may notify the nodes in the same supply chain of route information representing the newly registered coupling relationship between the own node and the other node. The node Ni may update the route table RTi based on route information transmitted from a node in the same supply chain as a response to the route information transmitted from the own node. As a result, the node Ni may create the route table RTi representing the coupling relationships between nodes in the supply chain including the own node.

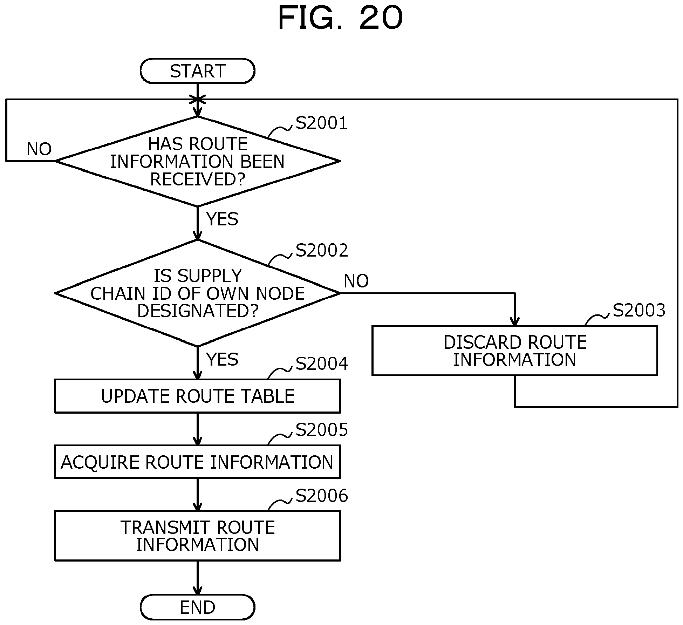

Next, a second update processing procedure of the node Ni will be described with reference to FIG. 20.

FIG. 20 is a flowchart illustrating an example of the second update processing procedure of the node Ni. In FIG. 20, first, the node Ni determines whether route information has been received from any node of the nodes N1 to Nn (step S2001). The node Ni waits for reception of the route information (step S2001: No). The route information to be received corresponds to third route information.

When the route information has been received (step S2001: Yes), the node Ni determines whether the supply chain ID of the own node is designated as the destination of the route information (step S2002). When the supply chain ID of the own node is not designated (step S2002: No), the node Ni discards the received route information (step S2003), and returns to step S2001.

On the other hand, when the supply chain ID of the own node is designated (step S2002: Yes), the node Ni updates the route table RTi based on the received route information (step S2004). Next, the node Ni refers to the route table RTi and acquires route information corresponding to the supply chain ID included in the received route information (step S2005).

The node Ni designates the supply chain ID of the own node or the transmission source of the received route information as the destination and transmits the acquired route information (step S2006), and ends the series of processes in the flowchart. The route information to be transmitted corresponds to fourth route information.

Accordingly, the node Ni may update the route table RTi when a coupling relationship between nodes in the supply chain to which the own node belongs is newly registered.

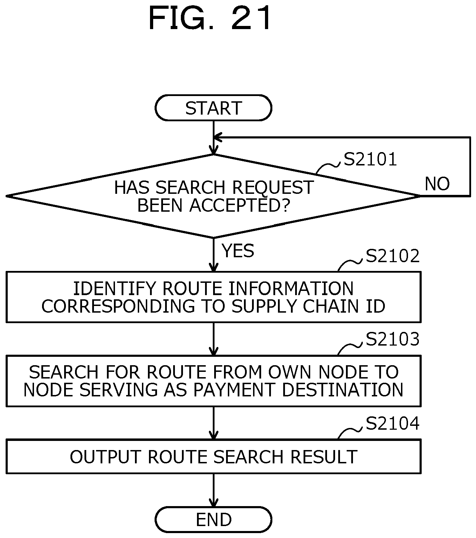

Next, a route search processing procedure of the node Ni will be described with reference to FIG. 21.

FIG. 21 is a flowchart illustrating an example of the route search processing procedure of the node Ni. In the flowchart of FIG. 21, first, the node Ni determines whether a search request for a route from the own node to a node serving as a payment destination has been accepted (step S2101). The node Ni waits for acceptance of the search request (step S2101: No).

When the search request has been accepted (step S2101: Yes), the node Ni refers to the route table RTi and identifies the route information corresponding to the supply chain ID included in the search request (step S2102). Next, the node Ni refers to the identified route information, and searches for a route to reach the node serving as a payment destination from the own node via nodes in the same supply chain (step S2103).

The node Ni outputs a route search result for identifying the route searched for (step S2104), and ends the series of processes in the flowchart.

Accordingly, the node Ni may search for a route to reach the node serving as a payment destination from the own node via nodes in the same supply chain.

As described above, when a coupling relationship between the own node and another node in which a channel capable of off-chain transaction is formed among the nodes N1 to Nn capable of communicating with each other is registered, the node Ni according to the embodiment may transmit first route information representing the coupling relationship to the nodes in the first group including the own node and the other node among the nodes N1 to Nn. When receiving, from a first node in the first group that has received the first route information, second route information representing the coupling relationship between the first node and a node in the first group, the node Ni updates route table information based on the received second route information. Route table information is information used for a route search from the own node to a node serving as a payment destination in the first group. For example, the first group is a group formed by nodes respectively corresponding to stakeholders belonging to the same supply chain.

Accordingly, the node Ni may suppress the amount of route information to be referred to at the time of a route search to a node serving as a payment destination, to the amount corresponding to the number of coupling relationships between nodes in the supply chain to which the own node belongs. For this reason, the node Ni may reduce the amount of calculation for a route search and reduce the load. The node Ni may suppress the memory usage for holding route information. By sharing route information among the nodes in the same supply chain, the node Ni may avoid a situation in which a route to a node serving as a payment destination may not be found.

When receiving third route information representing a coupling relationship between a second node in the first group and a third node in the first group, which is transmitted from the second node in response to the registration of the coupling relationship, the node Ni may update route table information based on the received third route information. The node Ni may transmit, to the second node, fourth route information representing a coupling relationship between the own node and another node in the first group by referring to the route table RTi.

Accordingly, the node Ni may update the route table RTi based on route information to be transmitted when a coupling relationship between nodes in the supply chain to which the own node belongs is newly registered. The node Ni may transmit, as a response to the route information transmitted from a node in the same supply chain, route information representing a coupling relationship between nodes including the own node. For this reason, the node Ni may share route information with a node that is newly registered in the supply chain to which the own node belongs.

When accepting a search request for a route from the own node to a node serving as a payment destination, the node Ni may refer to the route table RTi and search for a route based on a coupling relationship between nodes in the first group. The node Ni may output information for identifying the route searched for.

Accordingly, the node Ni may search for a route to reach the node serving as a payment destination from the own node via nodes in the same supply chain.

The node Ni may transmit, as the first route information, first route information including information on a deposit of an off-chain transaction in the channel formed between the own node and another node. The node Ni may receive, as the second route information, second route information including information on a deposit of an off-chain transaction in the channel formed between the first node and a node in the first group.

Accordingly, the node Ni may share, among the nodes in the same supply chain, route information including information on deposit usable in searching for a route for performing an off-chain transaction.

The node Ni may receive, as the third route information, third route information including information on a deposit of an off-chain transaction in the channel formed between the second node and the third node. The node Ni may transmit, as the fourth route information, fourth route information including information on a deposit of an off-chain transaction in the channel formed between the own node and another node in the first group.

Accordingly, the node Ni may share, among the nodes in the same supply chain, route information including information on deposit usable in searching for a route for performing an off-chain transaction.

The node Ni may transmit first route information to the nodes in the first group, in response to the acceptance, from the information management device 201, of a registration notification indicating that a coupling relationship between the own node and another node in the first group has been registered.

Accordingly, when a new stakeholder is added to the supply chain and a coupling relationship between nodes in the supply chain is newly registered, the node Ni may share route information among the nodes in the supply chain.

Thus, the node Ni may reduce a load applied to the route control of a channel for payment and improve the scalability of the number of nodes, in returning a consideration for the environmental contribution in a supply chain through an off-chain transaction.

The management method described in the present embodiment may be realized by causing a computer, such as a personal computer or a workstation, to execute a program prepared in advance. The management program is recorded in a computer-readable recording medium such as a hard disk, a flexible disc, a CD-ROM, a DVD, or a USB memory, and is executed by being read by the computer from the recording medium. The management program may be distributed via a network such as the Internet.

The management device 101 (node Ni) described in the present embodiment may also be realized by an application specific integrated circuit (IC), such as a standard cell or a structured application-specific integrated circuit (ASIC), or a programmable logic device (PLD), such as a field-programmable gate array (FPGA).

## Claims

1. A management device comprising a control unit, wherein the control unit,
when a coupling relationship between an own node and another node in which a channel capable of off-chain transaction is formed among a plurality of nodes capable of communicating with each other is registered, transmits first route information that represents the coupling relationship to a node in a first group that includes an own node and the another node among the plurality of nodes, and
when second route information that represents a coupling relationship between a first node in the first group and a node in the first group is received from the first node that has received the first route information, updates route table information used for a route search from an own node to a node serving as a payment destination in the first group based on the received second route information.

2. The management device according to claim 1, wherein the control unit,
when third route information that represents a coupling relationship between a second node in the first group and a third node in the first group, which is transmitted from the second node in response to registration of the coupling relationship, is received, updates the route table information based on the received third route information, and
transmits, to the second node, fourth route information that represents a coupling relationship between an own node and another node in the first group by referring to the route table information.

3. The management device according to claim 1 or 2, wherein the control unit,
when a search request for a route from an own node to the node serving as a payment destination has been accepted, refers to the route table information and searches for the route based on a coupling relationship between nodes in the first group, and
outputs information for identifying the route searched for.

4. The management device according to any one of claims 1 to 3, wherein the first group is formed by nodes that respectively correspond to stakeholders belonging to a same supply chain, and includes an own node and the another node.

5. The management device according to any one of claims 1 to 4, wherein the control unit
transmits the first route information to nodes in the first group, in response to acceptance, from an information management device that manages a coupling relationship between nodes in which a channel capable of off-chain transaction is formed among the plurality of nodes, of a notification that indicates that a coupling relationship between an own node and another node in the first group has been registered.

6. The management device according to any preceding claim,
wherein the first route information includes information on a deposit of an off-chain transaction in the channel formed between an own node and the another node, and
wherein the second route information includes information on a deposit of an off-chain transaction in the channel formed between the first node and a node in the first group.

7. The management device according to claim 2, or any of claims 3 to 6 when read as appended to claim 2,
wherein the third route information includes information on a deposit of an off-chain transaction in the channel formed between the second node and the third node, and
wherein the fourth route information includes information on a deposit of an off-chain transaction in the channel formed between an own node and another node in the first group.

8. The management device according to any preceding claim,
wherein each of the plurality of nodes is capable of recording a blockchain related to a virtual currency transaction.

9. A management method comprising:
when a coupling relationship between an own node and another node in which a channel capable of off-chain transaction is formed among a plurality of nodes capable of communicating with each other is registered, transmitting first route information that represents the coupling relationship to a node in a first group that includes an own node and the another node among the plurality of nodes; and
when second route information that represents a coupling relationship between a first node in the first group and a node in the first group is received from the first node that has received the first route information, updating route table information used for a route search from an own node to a node serving as a payment destination in the first group based on the received second route information.

10. A management program causing a computer to execute a processing of:
when a coupling relationship between an own node and another node in which a channel capable of off-chain transaction is formed among a plurality of nodes capable of communicating with each other is registered, transmitting first route information that represents the coupling relationship to a node in a first group that includes an own node and the another node among the plurality of nodes; and
when second route information that represents a coupling relationship between a first node in the first group and a node in the first group is received from the first node that has received the first route information, updating route table information used for a route search from an own node to a node serving as a payment destination in the first group based on the received second route information.
